# EUROPÄISCHE PATENTSCHRIFT

(11) **EP 0 899 079 B1**
(45) Veröffentlichungstag und Bekanntmachung des Hinweises auf die Patenterteilung: **02.07.2003**
(21) Anmeldenummer: 98113075.0
(22) Anmeldetag: 14.07.1998
(51) Int. Cl.: B29C 47/10, B29C 47/92

(54) **Verfahren zum Zuführen von Kunststoffgranulat in die Einlauföffnung eines Kunststoffextruders und entsprechende Vorrichtung**
Method of feeding plastic granules into the inlet of an extruder and according apparatus
Procédé pour l'alimentation de granules plastiques dans l'orifice d'entrée d'une extrudeuse et dispositif correspondant

(30) Priorität: 25.08.1997 DE 19736979
(43) Veröffentlichungstag der Anmeldung: 03.03.1999
(73) Patentinhaber: Windmöller & Hölscher, D-49525 Lengerich (DE)
(72) Erfinder: Feistkorn, Werner, Dr., 48369 Saerbeck (DE); Herschbach, Christof, Dr., 48157 Münster (DE); Beckmann, Hans-Udo, 58509 Lüdenscheid (DE); Saatkamp, Richard, 49525 Lengerich (DE)

(56) Entgegenhaltungen:
- DE-A- 4 027 319
- PATENT ABSTRACTS OF JAPAN vol. 011, no. 238 (M-613), 5. August 1987 & JP 62 051406 A (M L ENG KK), 6. März 1987
- PATENT ABSTRACTS OF JAPAN vol. 012, no. 067 (M-673), 2. März 1988 & JP 62 212121 A (M L ENG KK), 18. September 1987
- PATENT ABSTRACTS OF JAPAN vol. 097, no. 009, 30. September 1997 & JP 09 123252 A (SEKISUI CHEM CO LTD), 13. Mai 1997

## Beschreibung

Die Erfindung betrifft ein Verfahren zum Zuführen von Kunststoffgranulat in die Einlauföffnung eines Kunststoffextruders mit einem Speicherbehälter gemäß Anspruch 1, und eine vorrichtung gemäß Anspruch 8.

Bei von Kunststoffextrudern gespeisten Extrusionswerkzeugen zur Herstellung von Kunststoffprodukten, beispielsweise Profilen, Rohren oder Blasfolien, wird üblicherweise die zu einem Auftrag gehörende Menge durch die in den Extruder aufgegebene, nach Gewicht bestimmte Menge des eingesetzten Kunststoffgranulats bestimmt. Die hergestellten extrudierten Kunststoffprodukte haben ein bestimmtes Gewicht pro Meter, so daß sich aus dem Gewicht des eingesetzten Kunststoffmaterials die zu einem Auftrag gehörende Menge auch nach laufenden Metern bestimmen läßt.

Die Geschwindigkeit des Austragswechsels wird beipielsweise durch den Einsatz mehrerer Speicherbehälter erhöht. So zeigt die JP-A- 62 212121 ein Verfahren bei dem diese Speicherbehälter gegeneinander ausgetauscht werden. Um eine Durchmischung der Materialien zu vermeiden, wird die Länge des bereits extrudierten Materials und die Rotationsfrequenz der Extruderschnecke aufgezeichnet. Aus diesen beiden Meßwerten wird errechnet, wann der zunächst noch mit dem alten, vor der Umstellung eingesetzten Material befüllte Extruder völlig leerlaufen ist. Erst zu diesem Zeitpunkt wird das neue Material zugeführt.
Eine diametral entgegengesetzte Zielsetzung verfolgt die JP-A-6205 1406. Bei dem vorgestellten Verfahren geht es um die kontinuierliche Extrusion eines Produktes - wie zum Beispiel eines Kunstroffrohres - während laufend vorgenommener Materialwechsel. Diese Zielsetzung ist beispielsweise hifreich, um Lufteinschlüsse im Extruder zu vermeiden. Bei dem vorgestellten Verfahren wird in Kauf genommen, dass Abfallprodukte aus einem Gemisch beider Materialien entstehen, damit die Extrusion des Produktes nicht abreißt.
Beide Verfahren setzen eine Mehrzahl von Spelcherbehältern ein, die beim Produktwechsel ausgetauscht, nicht jedoch vollständig entleert werden.
Ein anderes Messverfahren und eine andere Vorrichtung mit nur einem Speicherbehälter zeigt die DE 40 27 319 A1
Da ein Kunststoffextruder pro Umdrehung seiner Schnecke eine sehr genau nach Gewicht zu bestimmende Menge an Kunststoffgranulat einzieht, läßt sich die von einem Extruder verarbeitete, nach Gewicht bestimmte Kunststoffmenge einfach durch die Anzahl der Schneckenumdrehungen bestimmen. Wird nun beispielsweise bei dem aus DE 40 27 319 A1 bekannten Verfahren, welches der eingangs angegebenen Art angehört, der Herstellungsprozess eines laufenden Auftrags beendet, wenn die der Auftragsmenge entsprechenden Umdrehungen der Extruderschnecke gezählt worden sind, befindet sich üblicherweise noch nicht verarbeitetes Kunststoffgranulat in dem Speicher- und Zwischenspeicherbehälter. Soll nun nach der Beendigung eines Auftrags ein nachfolgender Auftrag mit einem anderen Rezept, d.h. mit einem anderen Kunststoffgranulat, durchgeführt werden, muß das noch vorhandene Kunststoffgranulat aus dem Speicherbehälter und dem Zwischenspeicherbehälter entfernt werden. Dieses Material wird üblicherweise nicht für andere Aufträge verarbeitet, sondern entsorgt.

Bei dem bekannten Verfahren kommt es nur in Ausnahmefällen vor, daß bei Beendigung eines Auftrags auch die Speicher- und Zwischenspeicherbehälter leer oder nahezu leer gelaufen sind. Dies ist darauf zurückzuführen, daß der Speicherbehälter mit einem Fütlstandsmesser versehen ist, bis zu dem dieser immer. dann beispielsweise über eine Saugleitung mit Material gefüllt wird, wenn dessen in den Zwischenspeicherbehälter mündende Auslauföffnung geschlossen wird. Die Folge ist, daß der Speicherbehälter bei Beendigung eines Auftrags immer dann auch vollständig gefüllt sein wird, wenn nicht gerade der Zwischenspeicherbehälter seinen unteren Füllstand erreicht hat und wieder durch Öffnen der Ausfauföffnung des Speicherbehälters gefüllt wird.

Aufgabe der Erfindung ist es daher, ein Verfahren der eingangs angegebenen Art anzugeben, bei dem sich die Rezept- bzw. Auftragswechselzeiten erheblich verkürzen und Kunststoffgranulat einsparen läßt.

Erfindungsgemäß wird diese Aufgabe bei einem Verfahren der eingangs angegebenen Art durch die Merkmale des Anspruchs 1 sowie durch die vorrichtung gemäß Anspruch 8 gelöst.

Zur Steuerung der zu einem Auftrag gehörenden Menge und der Zuführung des Kunststoffgranulats in den Speicherbehälter und zur Öffnung und zum Verschluß der Auslauföffnung des Speicherbehälters ist ein Rechner vorgesehen, der die zu einem Auftrag gehörenden Umdrehungen der Extruderschnecke errechnet und zählt und die Füllungen des Speicherbehälters und des Zwischenspeicherbehälters steuert.

Der Speicherbehälter kann volumetrisch nach jedem Schließen seines Auslaufs durch Einschalten eines Sauggebläses und Ansaugen des Kunststoffmaterials durch die Saugleitung bis zu seinem durch den Füllstandsmesser bestimmten Fülistand gefüllt werden. Der Rechner errechnet sodann aus dem Volumen und dem spezifischen Gewicht bzw. Litergewicht die in dem Speicherbehälter nach Gewicht bestimmte Menge an Kunststoffgranulat.

Da der mit seinem Auslauf in den Trichter des Extruders mündende Zwischenspeicherbehälter auf eine Wiegeeinrichtung abgestützt ist, kennt der Rechner aufgrund der diesem zugeführten Signale der Wiegeeinrichtung das jeweilige Füllgewicht des Zwischenspeicherbehälters. Um nun die von dem Extruder noch zu verarbeitende Restmenge von Granulat am Ende eines jeden Auftrags so genau erfassen zu können, daß im wesentlichen keine Granulatreste mehr in den Behältern verbleiben, vergleicht der Rechner ständig die Restmenge mit den Füllungen bzw. Füllvolumen der Behälter. Beträgt die von dem Rechner errechnete benötigte Restmenge die vollständige Füllmenge des Speicherbehälters zuzüglich der gerade gewogenen Restmenge des Zwischenbehälters, wird die Auslauföffnung des Speicherbehälters durch den Rechner sofort geschlossen, wenn diese nicht gerade geschlossen sein sollte, so daß der Speicherbehälter zum letzten Mal auf seine bestimmte Füllmenge aufgefüllt wird. Sodann wird die weitere Füllung des Speicherbehälters unterbrochen, so daß der laufende Auftrag mit der richtigen Kunststoffmenge beendet werden kann, die in den beiden Behältern noch vorhanden ist.

Bei Annäherung an das Ende eines laufenden Auftrags kann sich der Zustand ergeben, daß der Speicherbehälter noch vollständig gefüllt und der Zwischenspeicherbehäiter noch eine Restmenge enthält. Die Summe dieser beiden in dem Speicherbehälter und dem Zwischenspeicherbehälter vorhandenen Mengen kann gerade ausreichen, um den laufenden Auftrag zu beenden.

Nach einer bevorzugten Ausführungsform ist daher vorgesehen, daß die Förderung von Kunststoffmaterial in den Speicherbehälter unterbrochen wird, wenn die vollständige Füllung des Speicherbehälters und die momentane Füllung des Zwischenbehälters der benötigten Restmenge entspricht, und daß die noch vorhandenen Füllmengen in die Einlauföffnung eingespeist werden.

Errechnet also der Rechner, daß die für den laufenden Auftrag noch benötigte Restmenge an Kunststoffgranulat der vollständigen Füllung des Speicherbehälters und der momentanen Füllung des Zwischenspeicherbehälters entspricht, wird die erneute Füllung des Speicherbehälters verhindert und die noch vorhandenen Mengen in beiden Behältern werden in Extruder aufgegeben.

Nach einer anderen Ausführungsform wird die Aufgabe erfindungsgemäß dadurch gelöst, daß die Füllmengen des Speicherbehälters und des Zwischenspeicherbehälters gewogen werden und die Zufuhr von Material in den Speicherbehälter unterbrochen wird, wenn die Summe des Gewichts der Füllmengen beider Behälter der verbleibenden von dem Extruder zu verarbeitenden, nach Gewicht bestimmten Restmenge entspricht.

Nach einer Variante ist bei einem Verfahren zum Zuführen von Kunststoffgranulat in die Einlauföffnung eines Extruders mittels einer Fördereinrichtung, wobei zwischen der Fördereinrichtung und der Einlauföffnung des Extruders zumindest ein Speicherbehälter vorgesehen ist, erfindungsgemäß vorgesehen, daß ein Rechner die Materialmenge zwischen der Fördereinrichtung und der Einlauföffnung des Extruders zyklisch ermittelt und mit der bis zur Beendigung des Auftrags benötigten Materialmenge vergleicht und daß die Fördereinrichtung bereits vor Beendigung eines Auftrags abgeschaltet wird, sobald die vor der Einlauföffnung des Extruders stehende Materialmenge gleich oder größer ist als die zur Abarbeitung eines Auftrags noch benötigte Materialrestmenge. Durch diese Verfahrensvariante wird im Idealfall ebenfalls erreicht, daß der Speicherbehälter bis zur Abarbeitung eines Auftrags völlig geleert ist.

Ein Ausführungsbeispiel der Erfindung wird nachstehend anhand der Zeichnung, in deren einziger Figur oberhalb der Einfüllöffnung eines Extruders ein Zwischenbehälter und ein Speicherbehälter schematisch dargestellt sind, näher erläutert.

Über der Einlauföffnung 2 eines nur schematisch dargestellten Teils eines Extruders 1 hängt ein als Dosierwaage ausgebildeter Zwischenspeicherbehälter 3. Dieser Zwischenspeicherbehälter 3 wird von einen Tragarm 4 getragen, der in der dargestellten Weise mit dem angedeuteten Maschinengestell verbunden ist und einen Dehnungsmeßstreifen 5 aufweist. Dieser Dehnungsmeßstreifen übernimmt die Funktion einer Dosierwaage.

Oberhalb des Zwischenbehälters 3 ist ein Speicherbehälter 9 angeordnet, dessen unterer Auslauf 7 durch einen Schieber 8 geschlossen werden kann. In den oberen Bereich des Speicherbehälters 9 mündet ein als Saugrohr 16 ausgebildetes Förderrohr. Der Deckel des Speicherbehälters 9 ist mit einem Sauggebläse 10 versehen, durch dessen Betätigung über das Saugrohr 16 Kunststoffgranulat angesaugt werden kann. Der Speicherbehälter 9 ist mit einem Füllstandsmesser 14 versehen, der die maximal zulässige Füllstandshöhe in dem Speicherbehälter erfaßt.

In dem in der Zeichnung dargestellten Betriebszustand ist der Schieber 8 geöffnet, so daß Granulat in den eine Dosierwaage bildenden Zwischenbehälter 3 fließen kann. Durch das Öffnen des Schiebers 8 wird gleichzeitig ein Signal erzeugt, welches verhindert, daß das Sauggebläse 10 eingeschaltet werden kann. Der Schieber 8 wird geschlossen, sobald ein von dem Dehnungsmeßstreifen 5 abgeleitetes Signal anzeigt, daß in dem Zwischenbehälter 3 genügend Material vorhanden ist. Mit dem Schließen des Schiebers 8 wird unmittelbar ein Signal erzeugt, das das Sauggebläse 10 einschaltet. Das Sauggebläse 10 bleibt so lange eingeschaltet, bis durch das Saugrohr 16 soviel Granulat in den Zwischenspeicherbehälter 9 angesaugt worden ist, daß der Füllstandsmesser 14 von dem steigenden Füllstand betätigt wird. Sobald der Füllstandsmesser den oberen Füllstand in dem Behälter 9 erfaßt hat, wird das Sauggebläse 10 abgeschaltet.

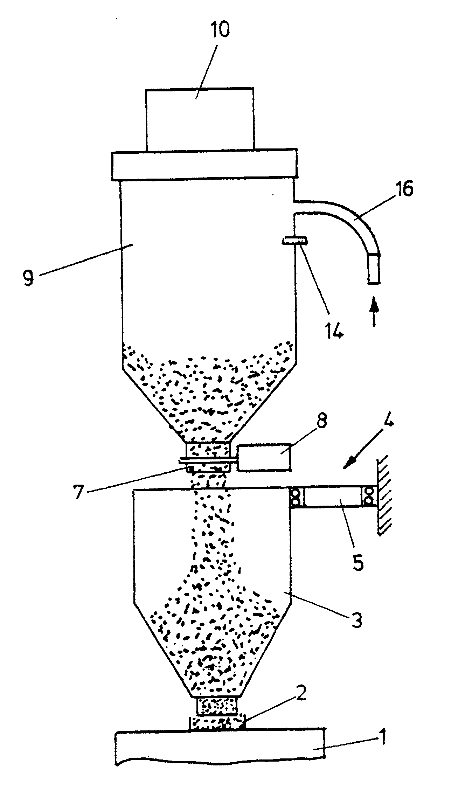

Entleerung und Füllung des Zwischenspeicherbehälters 3 und des Speicherbehälters 9 erfolgt während des Betriebs in der beschriebenen Weise. Soweit entspricht die hier beschriebene Vorrichtung der anhand der Fig. 3 in der DE 40 27 319 A1 beschriebenen Vorrichtung.

Nach dem erfindungsgemäßen Verfahren ist zusätzlich ein nicht dargestellter Rechner vorgesehen, der aus der Auftragsmenge die für den Auftrag benötigte Anzahl von Umdrehungen der Extruderschnecke berechnet. Aus den jeweils bis zur Beendigung des Auftrags noch benötigten Umdrehungen der Extruderschnecke errechnet der Rechner die noch benötigte Menge des einzusetzenden Kunststoffgranulats.

Weiterhin erfaßt der Rechner ständig die in dem Zwischenspeicherbehälter vorhandene Gewichtsmenge an Granulat, so daß er durch einen entsprechenden Vergleich den Zeitpunkt festlegen kann, zu dem die benötigte Restmenge für den jeweiligen Auftrag gleich der nach Gewicht bestimmten Menge an Granulat ist, die noch in dem Zwischenspeicherbehälter vorhanden ist und die in dem Speicherbehälter vorhanden ist oder von diesem noch aufgenommen werden kann. Sollte zu diesem Zeitpunkt die Auslauföffnung des Speicherbehälters gerade geöffnet sein, schließt der Rechner diese sofort, so daß der Speicherbehälter zum letzten Mal für den laufenden Auftrag gefüllt wird.

Nach einer Variante des erfindungsgemäßen Verfahrens ist auch der Speicherbehälter 9 auf einer Wiegeeinrichtung abgestützt, so daß der Rechner ständig das Füllgewicht beider Behälter kennt und die Zufuhr von Granulat zu dem Speicherbehälter unterbricht, wenn die Summe des Gewichts beider Behälter der von dem Rechner errechneten Restmenge für den jeweiligen Auftrag entspricht.

## Patentansprüche

1. Verfahren zum Zuführen von Kunststoffgranulat in die Einlauföffnung (2) eines Extruders mittels einer Fördereinrichtung (16), wobei zwischen der Fördereinrichtung und der Einlauföffnung (2) des Extruders zumindest ein Speicherbehälter (3,9) vorgesehen ist, wobei ein Rechner die Materialmenge zwischen der Fördereinrichtung und der Einlauföffnung des Extruders ständig ermittelt und mit der bis zur Beendigung des Auftrags benötigten Materialmenge vergleicht und dass die Fördereinrichtung bereits vor Beendigung eines Auftrags abgeschaltet wird, sobald die vor der Einlauföffnung des Extruders stehende Materialmenge gleich oder größer ist als die zur Abarbeitung eines Auftrags noch benötigte Materialrestmenge.

2. Verfahren nach Anspruch 1
**dadurch gekennzeichnet, dass**
dass die Ermittlung der die Materialmenge zwischen der Fördereinrichtung und der Einlauföffnung des Extruders durch den Rechner zyklisch erfolgt.

3. Verfahren nach Anspruch 1
**dadurch gekennzeichnet, dass**
ein Speicherbehälter (9) mit einer Fördereinrichtung (16) zu seiner Befüllung mit einer bestimmten Füllmenge und mit einer bodenseitig verschließbaren Auslauföffnung (7) versehen ist und
mit einem auf eine Wiegeeinrichtung (4) abgestützten Zwischenspeicherbehälter (3) mit einer bestimmten Füllmenge gefüllt wird, wenn er bis auf eine vorbestimmte Restmenge leer gelaufen ist. und der bodenseitig einen in die Einlauföffnung (2) des Extruders mündenden Auslauf aufweist
bei dem die für den jeweiligen Auftrag verarbeitete, nach Gewicht bestimmte Menge an Material durch die Umdrehungen der Extruderschnecke bestimmt wird.

4. Verfahren nach Anspruch 3
**dadurch gekennzeichnet, dass**
dass der Zwischenspeicherbehäiter (3) durch Öffnen des Auslaufs (7) des Speicherbehälters (9) mit einer bestimmten, nach Gewicht bestimmten Menge von Kunststoffgranulat gefüllt und der Speicherbehälter (9) nach erneutem Schließen seines Auslaufs mit seiner konstanten Füllmenge gefüllt wird, wenn die Summe des Gewichts der Füllungen beider Behälter der verbleibenden von dem Extruder zu verarbeitenden, nach Gewicht bestimmten Restmenge entspricht, dass die Fördermenge von Kunststoffmaterial in den Speicherbehäiter (9) unterbrochen und dieser einmal oder mehrmals geöffnet wird, bis die von diesem gespeicherte Menge in den Zwischenspeicherbehälter (3) eingetreten ist.

5. Verfahren nach Anspruch 3
**dadurch gekennzeichnet, dass**
die Förderung von Kunststoffmaterial in den Speicherbehälter (9) unterbrochen wird, wenn die vollständige Füllung des Speicherbehälters, und die momentane Füllung des Zwischenspeicherbehälters (3) der für den laufenden Auftrag benötigten Restmenge an Kunststoffgranufat entspricht, und dass die noch vorhandenen Füllungen der beiden Behälter in die Einlauföffnung (2) eingespeist werden.

6. Verfahren nach Anspruch 3
**dadurch gekennzeichnet, dass**
die Füllmenge des Speicherbehälters (9) und des Zwischenspeicherbehälters (3) gewogen werden und die Zufuhr von Kunststoffmaterial in den Speicherbehälter (9) unterbrochen wird, wenn die Summe des Gewichts der Füllmengen beider Behälter der verbleibenden von dem Extruder zu verarbeitenden, nach Gewicht bestimmten Restmenge entspricht.

7. Vorrichtung zum Zuführen von Kunststoffgranulat in die Einlauföffnung eines Kunststoffextruders, welche zumindest folgende Merkmale umfasst:
- einen Speicherbehälter (9), welcher mit einer Fördereinrichtung (16) zu seiner Befüllung mit einer bestimmten Füllmenge und mit einer bodenseitig verschließbaren Auslauföffnung (7) versehen ist und
- einen auf eine Wiegeeinrichtung (4) abgestützten Zwischenspeicherbehälter (3), welcher mit einer bestimmten Füllmenge gefüllt wird, wenn er bis auf eine vorbestimmte Restmenge leer gelaufen ist und der bodenseitig einen in die Einlauföffnung (2) des Extruders (1) mündenden Auslauf aufweist
- bei dem (1) die für den jeweiligen Auftrag verarbeitete, nach Gewicht bestimmte Menge an Material durch die Umdrehungen der Extruderschnecke bestimmt wird, einen Rechner, welcher die Materialmenge zwischen der Fördereinrichtung (16) und der Einlauföffnung zyklisch ermittelt, mit der bis zur Beendigung des Auftrags benötigten Materialmenge vergleicht und die Fördereinrichtung schon vor Beendigung eines Auftrags abgeschaltet, sobald die vor der Einlauföffnung des Extruders (1) stehende Materialmenge gleich oder größer ist als die zur Bearbeitung eines Auftrags noch benötigte Materialmenge.

8. Vorrichtung nach Anspruch 7
**gekennzeichnet durch**
Mittel zur Ermittlung des Gewichts (14) des Kunststoffmateriats im Speicherbehälter (9).

## Claims

1. Method of feeding plastic granules into the inlet opening (2) of an extruder by means of a conveying device (16), at least one storage container (3, 9) being provided between the conveying device and the inlet opening (2) of the extruder, a computer constantly determining the amount of material between the conveying device and the inlet opening of the extruder and comparing it with the amount of material required by completion of the order and the conveying device being switched off already before completion of an order, as soon as the amount of material ahead of the inlet opening of the extruder is equal to or greater than the residual amount of material still required for the processing of an order.

2. Method according to Claim 1, **characterized in that** the determination of the amount of material between the conveying device and the inlet opening of the extruder is performed cyclically by the computer.

3. Method according to Claim 1, **characterized in that** a storage container (9) is provided with a conveying device (16) for filling it with a specific filling amount and with an outlet opening (7) which can be closed at the bottom, and an intermediate storage container (3), supported on a weighing device (4), is filled with a specific filling amount when it has run empty all but for a predetermined residual amount, and has at the bottom an outlet opening into the inlet opening (2) of the extruder
in which method the amount of material processed for the respective order, determined by weight, is determined by the revolutions of the extruder screw.

4. Method according to Claim 3, **characterized in that** the intermediate storage container (3) is filled with a specific amount of plastic granules, determined by weight, by opening the outlet (7) of the storage container (9), and, after renewed closing of its outlet, the storage container (9) is filled with its constant filling amount when the sum of the weight of the fillings of the two containers corresponds to the remaining residual amount, determined by weight, to be processed by the extruder, **in that** the amount of plastic material being conveyed into the storage container (9) is interrupted and the latter is opened one or more times until the amount stored by it has entered the intermediate storage container (3).

5. Method according to Claim 3, **characterized in that** the conveyance of plastic material into the storage container (9) is interrupted when the complete filling of the storage container and the momentary filling of the intermediate storage container (3) corresponds to the residual amount of plastic granules required for the current order, and **in that** the still-existing fillings of the two containers are fed into the inlet opening (2).

6. Method according to claim 3, **characterized in that** the filling amount of the storage container (9) and the filling amount of the intermediate storage container (3) are weighed and the supply of plastic material into the storage container (9) is interrupted when the sum of the weight of the filling amounts of the two containers corresponds to the remaining residual amount, determined by weight, to be processed by the extruder

7. Apparatus for feeding plastic granules into the inlet opeaing of a plastics extruder, which comprises at least the following features:
- a storage container (9), which is provided with a conveying device (16) for filling it with a specific filling amount and with an outlet opening (7) which can be closed at the bottom and
- an intermediate storage container (3), supported on a weighing device (4), which is filled with a specific filling amount when it has run empty all but for a predetermined residual amount, and which has at the bottom an outlet opening into the inlet opening (2) of the extruder (1)
- in which extruder (1) the amount of material processed for the respective order, determined by Weight, is determined by the revolutions of the extruder screw
- a computer which cyclically determines the amount of material between the conveying device (16) and the inlet opening, compares it with the amount of material requized by completion of the order and switches off the conveying device already before completion of an order, as soon as the amount of material ahead of the inlet opening of the extruder (1) is equal to or greater than the amount of material still required for the processing of an order.

8. Apparatus according to Claim 7, **characterized by** means for determining the weight (14) of the plastic material in the storage container (9).

## Revendications

1. Procédé d'alimentation de granulat de matière plastique vers l'ouverture d'entrée (2) d'une extrudeuse à l'aide d'un dispositif de transport (16), au moins un réservoir (3,9) étant prévu entre le dispositif de transport (16) et l'ouverture d'entrée (2), un ordinateur déterminant constamment la quantité de matériau entre le dispositif de transport et l'ouverture d'entrée de l'extrudeu et comparant cette quantité avec la quantité de matériau nécessaire pour terminer la commande et le dispositif de transport étant arrêté avant la fin d'une commande dès que la quantité de matériau se trouvant devant l'ouverture d'entrée de l'extrudeuse est supérieure ou égale à la quantité de matériau restante nécessaire pour terminer la commande.

2. Procédé selon la revendication 1, **caractérisé en ce que** la détermination de la quantité de matériau entre le dispositif de transport et l'ouverture d'entrée de l'extrudeuse est effectuée de manière cyclique par l'ordinateur.

3. Procédé selon la revendication 1, **caractérisé en ce qu'**un réservoir de stockage (9) est muni d'un dispositif de transport (16) pour son remplissage avec une quantité déterminée et avec une ouverture de sortie (7) située sur le fond, rempli avec une quantité déterminée à l'aide d'un réservoir intermédiaire (3), appuyé sur un dispositif de pesage (4), lorsqu'il est vidé jusqu'à une quantité restante prédéterminée, et qui comporte une sortie débouchant sur l'ouverture d'entrée (2) de l'extrudeuse, dans lequel le poids de matériau traité pour la commande en cours est déterminé par le nombre de tours de la vis d'extrusion.

4. Procédé selon la revendication 3, **caractérisé en ce que** le réservoir intermédiaire (3) est rempli en ouvrant l'ouverture de sortie (7) du réservoir de stockage (9) avec un poids déterminé de granulat de matière plastique, et le réservoir de stockage (9) est rempli après la nouvelle fermeture de son ouverture de sortie lorsque la somme du poids des remplissages des deux réservoirs correspond à la quantité restant à traiter dans l'extrudeuse, et **en ce que** la quantité transportée de matière plastique vers le réservoir de stockage (9) est interrompue et celui-ci est ouvert une ou plusieurs fois jusqu'à ce que la quantité stockée sit introduit dans le réservoir intermédiaire (3).

5. Procédé selon la revendication 3 , **caractérisé en que** le transport de matière plastique vers le réservoir de stockage (9) est interrompu lorsque le remplissage complet du réservoir de stockage et le remplissage momentanée du réservoir intermédiaire (3) correspond à la quantité restante nécessaire pour la commande en cours et en ce que les remplissages restants des deux réservoirs sont alimentés vers l'ouverture d'entrée (2).

6. Procédé selon la revendication 3, **caractérisé en ce que** les quantités de remplissage du réservoir de stockage (9) et du réservoir intermédiaire (3) sont pesées et l'alimentation de matière plastique vers le réservoir de stockage (9) est interrompu lorsque la somme du poids des quantités de remplissage des deux réservoirs correspond au poids de la quantité restant à traiter dans l'extrudeuse.

7. Dispositif d'alimentation d'un granulat de matière plastique vers une ouverture d'entrée d'un extrudeuse de matière plastique comprenant au moins les caractéristiques suivantes :
- un réservoir de stockage (9), muni d'un dispositif de transport (16) pour son remplissage avec une quantité de remplissage déterminée et d'une ouverture de sortie (7) située sur le fond et pouvant être fermée et
- un réservoir intermédiaire (3) appuyé sur un dispositif de pesage (4) rempli dune quantité de remplissage déterminée lorsqu'il est vidé jusqu'à une quantité restante prédéterminée et qui comporte une sortie située sur le fond et débouchant sur l'ouverture d'entrée (2) de l'extrudeu (1)
- dans lequel la quantité de matériau traitée dans l'extrudeu est déterminée grâce au nombre de tours de la vis d'extrusion,
- un ordinateur qui détermine, de manière cyclique, la quantité de matériau entre le dispositif de transport (16) et l'ouvertu d'entrée, la compare avec la quantité de matériau nécessaire pour terminer la commande et arrête le dispositif de transport avant la fin d'une commande dès que la quantité de matériau se trouvant devant l'ouverture d'entrée de l'extrudeuse (1) est supérieure ou égale à la quantité restant encore nécessaire au traitement de la commande.

8. Dispositif selon la revendication 7, **caractérisé par** des moyens de détermination du poids (14) de la matière plastique se trouvant dans le réservoir (9).
